# EUROPEAN PATENT APPLICATION

(11) **EP 3 260 717 A1**
(43) Date of publication of application: **27.12.2017**
(21) Application number: 17171072.6
(22) Date of filing: 15.05.2017
(51) Int. Cl.: F16C 27/04, F16C 33/66, F01D 25/16, F16F 15/023, F16C 35/077, F16C 19/16, F16C 19/54

(54) **ROLLING BEARING ASSEMBLY OF AN EXHAUST GAS TURBOCHARGER WITH SQUEEZE OIL FILM DAMPER**

(30) Priority: 20.05.2016 JP 2016101714
(71) Applicant: OTICS Corporation, Nishio-city Aichi 444-0392 (JP)
(72) Inventor: Isogai, Tomoyuki, Nishio-city, Aichi 444-0392 (JP); Osuka, Ryu, Nishio-city, Aichi 444-0392 (JP)
(74) Representative: Kramer Barske Schmidtchen Patentanwälte PartG mbB

(57) **Abstract**

A bearing structure of a turbocharger (1) includes a rotor shaft (10), a ball bearing (20), and a housing (30). An inner ring (21) of the ball bearing (20) has the rotor shaft (10) inserted therein. The oil film damper (50) is formed between the inner ring (21) and an outer peripheral surface (10c) of the rotor shaft (10). The inner ring (21) rotates with rotation of the rotor shaft (10) via the oil film damper (50). Oil discharge paths (131) for scattering oil discharged from the oil film damper (50) radially outside, are provided on one end surface (21c) of the inner ring (21) in an axial direction (X) and on an opposing surface (13a) opposed to the inner ring (21), of a collar (13), respectively. The oil discharge paths (131) are formed of a groove that is arranged in a manner to be gradually apart from the oil film damper (50) in the axial direction as going radially outside.

## Description

### BACKGROUND OF THE INVENTION

### Field of the Invention

The present invention relates to a bearing structure of a turbocharger.

### Description of the Related Art

An internal combustion engine has been conventionally provided with a turbocharger which utilizes a flow of exhaust gas discharged from the internal combustion engine to compress intake air. The turbocharger includes a rotor shaft, a turbine impeller provided at one end of the rotor shaft, and a compressor impeller provided at the other end of the rotor shaft, and the rotor shaft is borne by a bearing structure. The bearing structure is housed in a bearing housing. JP-A-2012-92934 discloses a turbocharger that includes, as such a bearing structure, a bearing structure that has a ball bearing mounted on a rotor shaft and an oil film damper formed by filling the space between the ball bearing and a bearing housing with lubricant oil.

In the configuration disclosed in JP-A-2012-92934, the ball bearing includes an annular inner ring, an annular outer ring, and a ball interposed between the inner ring and the outer ring so that the inner ring and the outer ring can sliply rotate with respect to each other. The rotor shaft is fitted into the inside of the inner ring. According to such configuration, a rotation body assembly is thus constituted so that the rotor shaft, impellers provided at ends of the rotor shaft, and the inner ring of the ball bearing can integrally rotate. An oil film damper is formed between the outer ring of the ball bearing and the bearing housing by filling the space therebetween with oil, and the oil film damper is configured to exhibit a damping effect of preventing or reducing vibration of the rotation body assembly.

According to the configuration described above, an oil film damper is formed between an outer ring of a ball bearing and a bearing housing. Therefore, all the components to be arranged inside the oil film damper include not only a rotor shaft and impellers but also the ball bearing, and thus the mass of all the components arranged inside the oil film damper is relatively large. The outer diameter of the outer ring of the ball bearing is much larger than the inner diameter of an inner ring, and thus the contact area of the oil film damper and the outer ring of the ball bearing is relatively large. As a result, viscous force between the oil film damper and the outer ring tends to be large and, especially under low temperature environment, viscosity increases significantly.

Meanwhile, not a small amount of residual unbalance is always present in a rotation body assembly and thus a center of mass of the rotation body assembly in a radial direction is positioned to be shifted from a shaft center (centroid) of the rotor shaft. For this reason, during axial rotation of the rotation body assembly, the rotation body assembly tends to rotate eccentrically about an axis passing through the center of mass shifted from the shaft center of the rotor shaft. When the (inertial) mass of the components arranged inside the oil film damper is large and the viscous force is high, however, the eccentric rotation of the rotation body assembly is hindered and thus the rotation body assembly has to rotate about a position close to the centroid. Further, each of the impellers at both ends of the rotor shaft is in a state of a cantilever. In such a case, the impellers whirl with rotation of the rotor shaft. As a result, unusual noise may be generated during initial rotation or the impellers may contact the housing and may be damaged. These problems are more serious under low temperature environment. To prevent damage of the impellers, a clearance between each impeller and the housing (a tip clearance) needs to be increased. The increased tip clearance, however, causes a decrease in operation efficiency of a turbocharger.

As one proposal to prevent generation of such unusual noise and such a decrease in operation efficiency, it is conceivable to adjust the mass balance of the rotation body assembly so that a shift of the center of mass of the rotation body assembly from the shaft center of the rotor shaft is minimized, in order not to hinder the eccentric rotation of the rotation body assembly. In this configuration, however, the mass balance needs to be adjusted with high accuracy, which results in cost increase.

If screw hole machining is performed on the rotor shaft for co-rotation of the components arranged inside the oil film damper and the components arranged outside the oil film damper, adjustment of the mass balance of the rotation body assembly needs more time and more effort, which results in cost increase. Further, if screw hole machining is performed on the rotor shaft, a screw hole concentratedly suffers stress, which may cause a decrease in fatigue strength of the rotor shaft. In such a case, as one proposal to compensate for such a decrease in fatigue strength, it is conceivable to prepare the rotor shaft with a large diameter in the first place to secure sufficient fatigue strength. However, if the diameter of the rotor shaft is made large, a ball bearing needs to be upsized. Thus, the contact area of the oil film damper and the ball bearing increases and the viscous force between the oil film damper and the ball bearing also increases, which decreases the operation efficiency of the turbocharger. Moreover, there is a problem that a high-speed rotation of the rotor shaft easily unfastens a screw directly fastened to the rotor shaft.

Further, if the oil discharged from the oil film damper is adhered to a ball portion of the ball bearing, the dischargability in the oil film damper is inhibited and/or the friction in the ball bearing increases, thereby causing a decrease in operational efficiency. One solution for preventing or reducing adhesion of the oil to the ball portion is, for example, to arrange an oil discharge path (a slinger portion) of the oil film damper away from the ball bearing. According to such a solution in the bearing housing, when the oil discharge path is positioned considerably outside in an axial direction to arrange the oil discharge path away from the ball bearing, the bearing housing is elongated in the axial direction to be thereby upsized, which results in reduction of mountability on a vehicle and/or an engine. On the other hand, when the ball bearing is positioned inside in the axial direction to arrange the oil discharge path away from the ball bearing, in the case where the ball bearing is provided in pairs, the distance between the both ball bearings is shortened to thereby increase whirling of each impeller. Consequently, the tip clearance needs to be surely made large, which causes a decrease in operational efficiency.

The present invention has been achieved under such a background to provide a bearing structure of a turbocharger that can prevent generation of unusual noise, maintain operation efficiency, and reduce manufacturing costs.

### SUMMARY OF THE INVENTION

One aspect of the present invention provides a bearing structure of a turbocharger that includes a rotor shaft that has a turbine impeller mounted on a first end thereof and a compressor impeller mounted on a second end thereof; a ball bearing that includes an inner ring and an outer ring that are supported in relatively rotatable manner, the inner ring having the rotor shaft inserted therein; a retainer that holds the outer ring; a housing that houses the rotor shaft, the ball bearing, and the retainer; an oil film damper that is formed of oil in a film state and is interposed between the inner ring and an outer peripheral surface of the rotor shaft, the inner ring being configured to rotate with rotation of the rotor shaft via the oil film damper; and an oil discharge path that is provided at least either on one end surface of the inner ring in an axial direction or on an opposing surface of a collar, which is opposed to the inner ring, and that scatters oil discharged from the oil film damper radially outside of the rotor shaft with centrifugal force, the collar being mounted on the rotor shaft in a manner to be adjacent to the inner ring.

In the bearing structure, the oil discharge path is formed of a groove or a through hole that is arranged in a manner to be gradually apart from the oil film damper in the axial direction as going radially outside.

Another aspect of the present invention provides a bearing structure of a turbocharger that includes a rotor shaft that has a turbine impeller mounted on a first end thereof and a compressor impeller mounted on a second end thereof; a ball bearing that includes an inner ring and an outer ring that are supported in relatively rotatable manner, the inner ring having the rotor shaft inserted therein; a retainer that holds the outer ring; a housing that houses the rotor shaft, the ball bearing, and the retainer; an oil film damper that is formed of oil in a film state and is interposed between the inner ring and an outer peripheral surface of the rotor shaft, the inner ring being configured to rotate with rotation of the rotor shaft via the oil film damper; and an oil discharge path that is provided at least either on one end surface of the inner ring in an axial direction or on an opposing surface of a collar, which is opposed to the inner ring, and that scatters oil discharged from the oil film damper radially outside of the rotor shaft with centrifugal force, the collar being mounted on the rotor shaft in a manner to be adjacent to the inner ring.

In the bearing structure, the outer ring is interposed between an outer ring contact part that is formed on the housing in a manner to abut against the outer ring and a plate that is mounted on the housing, in the axial direction through the retainer. And, at least one of the outer ring contact part and the plate has a guide surface formed on a surface thereof on a side of the rotor shaft in a manner to be gradually apart from the oil film damper in the axial direction as going radially outside.

In the bearing structure of a turbocharger according to the one aspect described above, the oil discharge path is arranged in a manner to be gradually apart from the oil film damper in the axial direction as going radially outside, and thus the oil discharged from the oil film damper is scattered toward the direction to be apart from the oil film damper in an axial direction, along the oil discharge path with centrifugal force. Such configuration enhances oil drainability to prevent the oil from adhering to the ball portion in the ball bearing, and can prevent increase of friction in the ball bearing, accordingly. In addition, it is not necessary to arrange the oil discharge path for scattering the oil radially outside with centrifugal force, away from the ball bearing. Such arrangement avoids excessive upsizing of the bearing structure in the axial direction, thus preventing reduction of mountability on a vehicle and/or an engine. In another case where the bearing structure is configured to include the ball bearing in pairs, such configuration eliminates necessity to shorten the distance between the ball bearings provided in pairs, to thereby prevent increase of whirling of each impeller. Consequently, the tip clearance needs not be made large, which enables the bearing structure to maintain the operational efficiency.

In the bearing structure of a turbocharger according to the another aspect described above, at least one of the outer ring contact part and the plate has a guide surface formed on a surface thereof on the rotor shaft side in a manner to be gradually apart from the oil film damper in the axial direction as going radially outside. When the oil scattered from the oil discharge path with centrifugal force reaches the guide surface, the guide surface guides the oil toward the direction in which the oil is apart from the oil film damper in the axial direction. Consequently, the bearing structure exhibits operational effects similar to those in the former aspect of the bearing structure of a turbocharger.

In the bearing structures of a turbocharger according to both of the above described aspects, the oil film damper is formed between the inner ring of the ball bearing and the rotor shaft. In this way, the ball bearing and the retainer are not arranged inside the oil film damper. Therefore, the (inertial) mass of the components inside the oil film damper is relatively small. Further, the inner diameter of the inner ring of the ball bearing is sufficiently smaller than the outer diameter of the outer ring, and thus the contact area of the oil film damper and the outer peripheral surface of the rotor shaft is relatively small. For the reasons mentioned above, viscous force between the inner ring of the ball bearing and the outer peripheral surface of the rotor shaft can be relatively reduced.

Reduction of the viscous force reduces inhibition force that hinders a rotation body assembly from rotating about a center of mass. In addition, the (inertial) mass of the components arranged inside the oil film damper is relatively small. Consequently, the rotation body assembly is enabled to easily rotate eccentrically. As a result, the impellers provided on both ends of the rotor shaft are prevented from largely whirling during rotation of the rotor shaft thus preventing generation of unusual noise. Further, a tip clearance between each of the impellers and the housing is optimized to improve operation efficiency. As described above, because the rotation body assembly easily rotates eccentrically, not so high accuracy is required to adjust the mass balance of the rotation body assembly. As a result, the mass balance is easily adjusted, and manufacturing costs can be reduced accordingly.

As described above, because the viscous force between the oil film damper and the outer peripheral surface of the rotor shaft can be relatively reduced, an improvement in rotation response of the rotation body assembly can be expected to contribute to an improvement in transient performance of an internal combustion engine.

Especially when the viscosity of oil tends to be high, e.g. under low temperature environment, the reduction of the viscous force enables the bearing structure to exhibit a sufficient oil damping effect on the rotation body assembly.

In the bearing structures according to both of the above described aspects, the inner ring is configured to rotate with the rotation of the rotor shaft via the oil film damper. Specifically, friction in the oil film damper (that is, friction between the inner ring of the ball bearing and the rotor shaft) is larger than friction in the ball bearing (that is, friction between the inner ring and the outer ring). For this reason, when the rotor shaft rotates, relative rotation occurs between the inner ring and the outer ring in the ball bearing but relative rotation between the inner ring and the rotor shaft is suppressed in the oil film damper, so that the inner ring is enabled to rotate with the rotation of the rotor shaft only via the oil film damper. As a result, any additional mechanism for engaging the inner ring with the rotor shaft need not be provided to rotate the inner ring with the rotor shaft. For example, screw hole machining on the rotor shaft needs not be performed to engage the rotor shaft with the inner ring. Machining on an end of the inner ring needs not be performed to engage the end of the inner ring with an oil slinger. Further, machining on the end of the inner ring and/or a collar needs not be performed to engage the end of the inner ring with the collar. Thus, costs to be incurred by such machining can be eliminated and the adjustment of the mass balance of the rotation body assembly is made easy. The manufacturing costs can be reduced accordingly.

Because the rotor shaft need not be subjected to the screw hole machining, fatigue strength of the rotor shaft is improved as compared to a case where the screw hole machining is performed on the rotor shaft. The improvement of fatigue strength eliminates the necessity to increase the diameter of the rotor shaft. As a result, the ball bearing can be downsized and the contact area of the oil film damper and the ball bearing can be reduced. Consequently, the viscous force between the oil film damper and the ball bearing can be reduced to improve the operation efficiency of a turbocharger. Further, loosening of a screw that might be caused by high speed rotation of the rotor shaft needs not be considered.

According to the present invention, it is possible to provide a bearing structure of a turbocharger that can prevent generation of unusual noise, improve operation efficiency, and reduce manufacturing costs.

### BRIEF DESCRIPTION OF THE DRAWINGS

FIG. 1 is a cross-sectional schematic view of a bearing structure of a turbocharger according to Embodiment 1.
FIG. 2 is an enlarged view around an oil film damper on the side of a compressor impeller shown in FIG. 1.
FIG. 3 is an enlarged view around an oil film damper on the side of a turbine impeller shown in FIG. 1.
FIG. 4 is a perspective view of a retainer and a ball bearing according to Embodiment 1.
FIG. 5 is a perspective view of a collar according to Embodiment 1.
FIG. 6 is an enlarged view around an oil film damper on the side of a compressor impeller according to Modification 1.
FIG. 7 is an enlarged view around an oil film damper on the side of a compressor impeller according to Modification 2.
FIG. 8 is a perspective view of a collar according to Modification 2.
FIG. 9 is a cross-sectional schematic view of a bearing structure of a turbocharger according to Modification 3.
FIG. 10 is a cross-sectional schematic view of a bearing structure of a turbocharger according to Modification 4.

### DETAILED DESCRIPTION OF THE INVENTION

In the bearing structure of a turbocharger according to the one aspect described above, the outer ring is preferably interposed between an outer ring contact part that is formed on the housing in a manner to abut against the outer ring and a plate that is mounted on the housing, in the axial direction through the retainer. And also, at least one of the outer ring contact part and the plate has a guide surface formed on a surface thereof on the rotor shaft side in a manner to be gradually apart from the oil film damper in the axial direction as going radially outside. Such configuration provides a multiplier effect of the oil discharge path that is arranged in a manner to be gradually apart from the oil film damper in the axial direction as going radially outside, and the guide surface. Due to the multiplier effect, the bearing structure can exhibit an enhanced effect of inhibiting increase of the friction in the ball bearing, and an enhanced effect of improving the operational efficiency.

The oil discharge path has a radial outside end. The radial outside end is preferably positioned in a formation range of the guide surface in the axial direction. In such configuration, when the oil scattered from the oil discharge path with centrifugal force reaches the guide surface, the oil is surely guided along the guide surface toward the direction to be apart from the oil film damper in the axial direction. Consequently, the bearing structure can exhibit a more enhanced effect of inhibiting increase of the friction in the ball bearing, and a more enhanced effect of improving the operational efficiency.

### Embodiments

### Embodiment 1

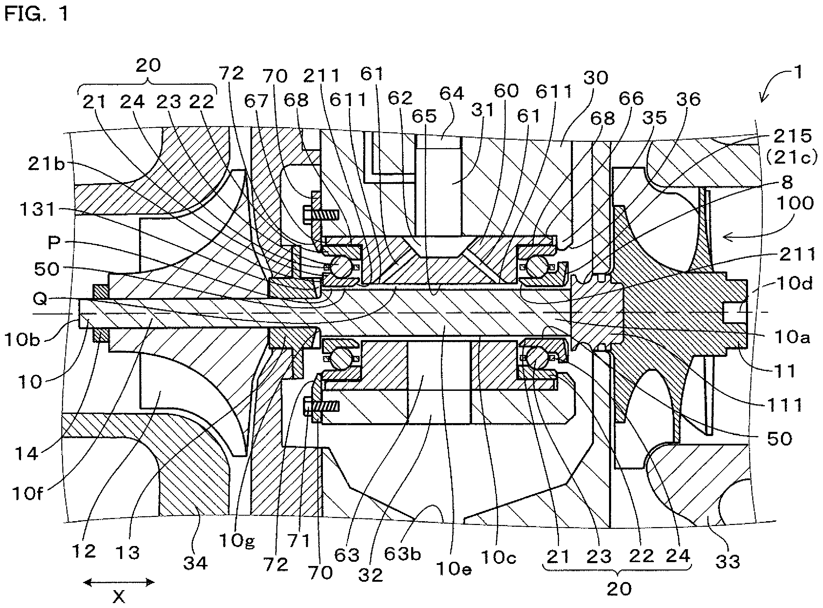

A bearing structure of a turbocharger 1 according to an embodiment is described with reference to FIGs. 1 to 4.

As shown in FIG. 1, the bearing structure 1 according to the present embodiment includes a rotor shaft 10, ball bearings 20, a retainer 60, and a housing 30.

A turbine impeller 11 is mounted on a first end 10a of the rotor shaft 10 and a compressor impeller 12 is mounted on a second end 10b of the rotor shaft 10.

Two ball bearings 20 are provided and each of the two ball bearings 20 includes an inner ring 21 and an outer ring 22 that are supported in relatively rotatable manner. The rotor shaft 10 is inserted into the inner ring 21.

The retainer 60 holds the outer ring 22.

The housing 30 houses therein the rotor shaft 10, the ball bearings 20, and the retainer 60 to constitute a bearing housing.

Oil in a film state is interposed between the inner ring 21 and an outer peripheral surface 10c of the rotor shaft 10 to form an oil film damper 50.

The inner ring 21 is configured to rotate with rotation of the rotor shaft 10 via the oil film damper 50.

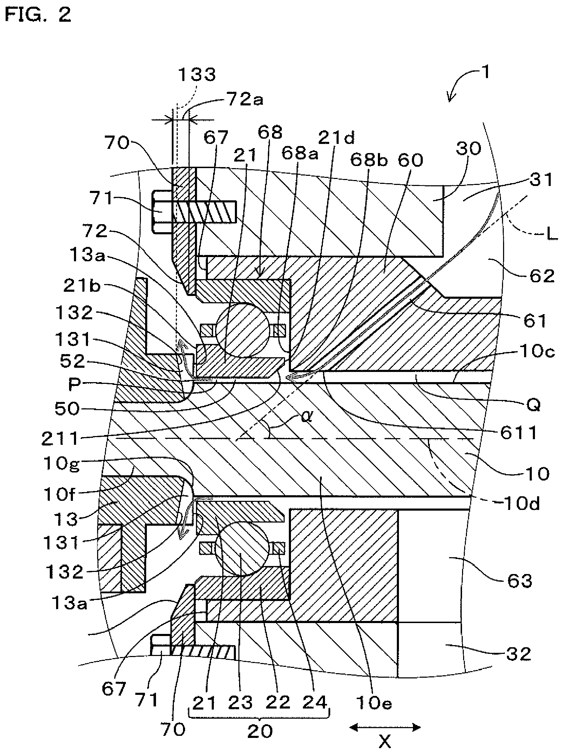

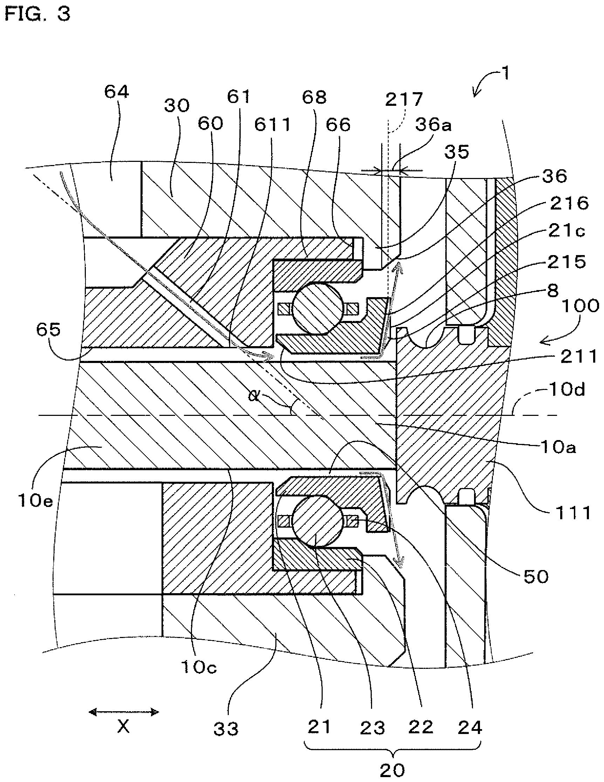

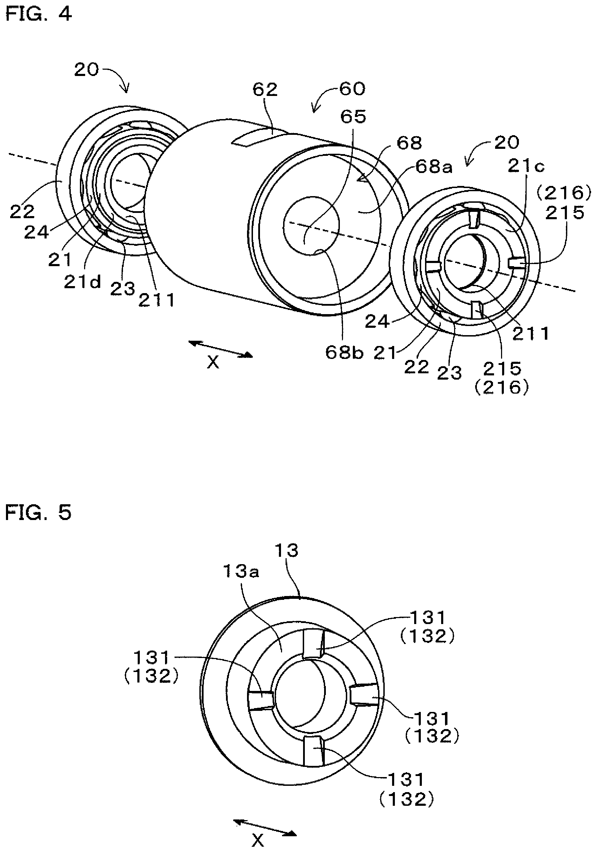

Oil discharge paths 131 and 217 are provided on one end surface 21c (shown in FIGs.3 and 4) of the inner ring 21 in an axial direction and on an opposing surface 13a (shown in FIGs. 2 and 5) of a collar 13, respectively. The opposing surface 13a is opposed to the inner ring 21. The collar 13 is mounted on the rotor shaft 10 in a manner to be adjacent to the inner ring. And the oil discharge paths 131 and 217 scatter oil discharged from the oil film damper 50 radially outside of the rotor shaft with centrifugal force.

As shown in FIGs. 2, 3, and 5, the oil discharge paths 131 and 217 are formed of a groove that is arranged in a manner to be gradually apart from the oil film damper 50 in an axial direction X as going radially outside.

The bearing structure 1 according to the present embodiment is described in detail below.

As shown in FIG. 1, the first end 10a of the rotor shaft 10 is provided integrally with the turbine impeller 11. The turbine impeller 11 is housed in a turbine housing 33. On the other hand, the second end 10b of the rotor shaft 10 passes through a collar 13 and the compressor impeller 12, and a shaft end nut 14 prevents the collar 13 and the compressor impeller 12 from coming off and rotating. The compressor impeller 12 is housed in a compressor housing 34. The housing 30, a bearing housing for the rotor shaft 10 is provided between the turbine housing 33 and the compressor housing 34.

As shown in FIG. 1, the retainer 60 is provided in the housing 30. As shown in FIGs. 1 and 4, the retainer 60 is formed in a substantially cylindrical shape, and the rotor shaft 10 is inserted into the retainer 60. A recessed part 68 is formed at both ends of the retainer 60 in an axial direction X. The recessed part 68 is formed along the outer ring 22 of the ball bearing 20 to fit the angular ball bearing 20 thereinto as shown in FIGs.1 and 4. The two angular ball bearings 20 are thus held by the retainer 60.

In the present embodiment, as shown in FIGs. 2 and 3, the ball bearing 20 is arranged in a single row and includes the inner ring 21, the outer ring 22, a rotator 23, and a holder 24 to constitute an angular ball bearing. The inner ring 21 and the outer ring 22 are formed in an annular shape. The rotator 23 has a ball shape and is interposed between the inner ring 21 and the outer ring 22 through the holder 24. The inner ring 21 and the outer ring 22 are thus configured to be relatively rotatable through the rotator 23. The outer ring 22 is fixed to the retainer 60 by fitting the ball bearing 20 into the recessed part 68 of the retainer 60. As shown in FIG. 1, the retainer 60 is interposed between the outer rings 22, and the outer rings 22 are tightly held by an outer ring contact part 35 that is formed on the housing 30 in a manner to abut against the outer ring 22 and a plate 70 that is mounted on the housing 30, in the axial direction X with the retainer 60 being interposed therebetween.

As shown in FIG. 1, two ball bearings 20 are provided. The two ball bearings 20 are fitted into the retainer 60 to be opposite to each other in the axial direction X. That is, the ball bearing 20 on the turbine impeller 11 side is configured to be able to support an axial load applied from the side of the turbine impeller 11 toward a side of the compressor impeller 112. On the other hand, as shown in FIGs. 1 and 2, the ball bearing 20 on the compressor impeller 12 side is configured to be able to support an axial load applied from the side of the compressor impeller 12 toward the side of the turbine impeller 11. Such configured two ball bearings 20 can support not only a radial load but also the axial loads in both directions.

As shown in FIGs. 1 and 2, the rotor shaft 10 is disposed passing through the inner ring 21 and the retainer 60. The rotor shaft 10 has a large diameter part 10e on a side of the first end 10a and a small diameter part 10f on a side of the second end 10b. The small diameter part 10f has a diameter smaller than that of the large diameter part 10e, and a stepped part 10g is formed between the large diameter part 10e and the small diameter part 10f. The compressor impeller 12 is provided on the small diameter part 10f, and the collar 13 as an annular member is provided between the compressor impeller 12 and the stepped part 10g. The collar 13 is fixed to the small diameter part 10f together with the compressor impeller 12 with the shaft end nut 14.

As shown in FIG. 1, the first end 10a of the rotor shaft 10 is provided with an enlarged diameter part 111. The enlarged diameter part 111 is fixed to the first end 10a of the rotor shaft 10 by welding. The turbine impeller 11 is joined to the enlarged diameter part 111. An oil slinger 8 is formed at the enlarged diameter part 111. The enlarged diameter part 111 may be joined to the turbine impeller 11 by welding when being formed integrally with the rotor shaft 10.

As shown in FIGs. 1 and 2, the retainer 60 and the two ball bearings 20 are positioned so as to oppose the large diameter part 10e of the rotor shaft 10. The inner diameter of the inner ring 21 is larger than the outer diameter of the large diameter part 10e of the rotor shaft 10 by approximately 0.05 to 0.1 mm. The inner diameter of an inner peripheral surface 65 of the retainer 60, measured between the two ball bearings 20 is larger than the outer diameter of the large diameter part 10e of the rotor shaft 10 by approximately 0.2 to 0.3 mm or more. Accordingly, a clearance Q between the inner peripheral surface 65 of the retainer 60 and the outer peripheral surface 10c of the large diameter part 10e of the rotor shaft 10 is twice or more larger than a clearance P between the inner ring 21 and the outer peripheral surface 10c. The clearances P and Q have a fixed size in a peripheral direction in a stationary state where the center of the inner ring 21 is aligned with the center of the rotor shaft 10.

In the clearance P between the inner ring 21 and the rotor shaft 10, oil is interposed in a film state to form the oil film damper 50. As shown in FIG. 2, oil is supplied from an oil supply path 61 formed in the retainer 60. The oil enters between the inner ring 21 and the rotor shaft 10 via an inner chamfered part 211 and then reaches the clearance P to form the oil film damper 50.

As shown in FIGs. 1 and 2, the oil supply path 61 establishes communication between an oil storage part 62 formed in a recessed shape at a vertically upper part of the retainer 60 and the inside of the retainer 60 (that is, a through part where the rotor shaft 10 is placed). In the present embodiment, the oil supply path 61 passing through the retainer 60 straightway is formed at an inclined angle to be close to the oil film damper 50 as approaching closer to the rotor shaft 10. At an exit of the oil supply path 61 (an end of the oil supply path 61 on the rotor shaft 10 side), an oil ejection port 611 that is open to eject oil flowing in the oil supply path 61 to the oil film damper 50 is formed. The oil storage part 62 of the retainer 60 communicates with an upper hole 31 of the housing 30 to supply oil through the upper hole 31. The upper hole 31 is closed by a plug 64. The plug 64 is removable.

As shown in FIGs. 1 and 2, the inner peripheral surface 65 of the retainer 60 directly opposes the outer peripheral surface 10c of the rotor shaft 10. Oil is ejected from the oil ejection port 611 of the oil supply path 61 that is open in the inner peripheral surface 65, directly toward the outer peripheral surface 10c of the rotor shaft 10 to be supplied to the oil film damper 50 positively by a wedge effect.

In the present embodiment, as shown in FIG. 1, the oil supply path 61 is provided in two places so as to supply oil to the respective oil film dampers 50 formed at both ends in the axial direction X. An oil discharge path 63 is formed at a vertically lower part of the retainer 60 to discharge oil from around the ball bearing 20. A lower hole 32 of the housing 30 and an oil discharge port 63b that is open to the outside of the housing 30 are formed under the oil discharge path 63. An auxiliary oil supply path extending vertically to the axial direction X may be formed between the two oil supply paths 61.

As shown in FIG. 1, each of the two oil supply paths 61 is formed extending straightway from the oil storage part 62 toward each of the oil film dampers 50. As shown in FIG. 2, in one of the two oil supply paths 61, which extends toward the oil film damper 50 on the compressor impeller 12 side, a center line L, an imaginary line parallel to the through direction of the oil supply path 61 extends linearly. The center line L is inclined with respect to a shaft center 10d of the rotor shaft 10. An angle α of the center line L and the shaft center 10d is preferably equal to or less than 45° and more preferably equal to or less than 30°. In the present embodiment, the angle α is 30°. The oil supply path 61 extending toward the oil film damper 50 on the turbine impeller 11 side is formed in the same manner.

As shown in FIG. 2, in the ball bearing 20 on the compressor impeller 12 side, the inner ring 21 has the inner chamfered part 211 at an end on the side close to the ejection port 611 of the oil supply path 61 in the axial direction X. The inner chamfered part 211 is formed on an entire inner corner part of the inner ring 21 by chamfering the inner corner part. A small clearance is provided between an end surface 21d of the inner ring 21 in the axial direction X on the side close to the ejection port 611 and a wall surface 68a of the recessed part 68 in which the ball bearing 20 is placed, the wall surface 68a opposing the end surface 21d in the axial direction X. As shown in FIG. 2, a corner part 68b of the recessed part 68 on the inner peripheral surface 65 side is positioned radially inside the end surface 21d of the inner ring 21. That is, the corner part 68b is positioned radially inside an outer peripheral end of the inner chamfered part 211. Accordingly, although the clearance provided between the end surface 21d of the inner ring 21 and the wall surface 68a opposing the end surface 21d is small, the oil ejected from the ejection port 611 is supplied preferentially to the oil film damper 50 along the inner chamfered part 211. The ball bearing 20 on the turbine impeller 11 side is formed in the same manner.

As shown in FIG. 2, on the side of the compressor impeller 12, the oil supplied to the oil film damper 50 is discharged from an end 52 of the oil film damper 50 on the compressor impeller 12 side and is scattered radially outside of the rotor shaft 10 via an oil discharge path 131 formed in the collar 13. As shown in FIG.5, the oil discharge path 131 is formed of a groove made by cutting out the opposing surface 13a that opposes to inner ring 21, into a recessed shape. And, as shown in FIG.2, the oil discharge path 131 is arranged in a manner to be gradually apart from the oil film damper 50 in the axial direction X as going radially outside. In other words, the oil discharge path 131 is cut out deeper as going radially outside. Thus, a bottom surface 132 of the oil discharge path 131 is tapered to be closer to the compressor impeller 12 as going radially outside. In the present embodiment, the oil discharge path 131 is formed in four places along a diameter direction of the collar 13 at peripherally equal intervals. On the side of the compressor impeller 12, in place of the oil discharge path 131 to be provided in the collar 13, an oil discharge path may be formed at an end 21b of the inner ring 21 of the ball bearing 20 in an axial direction, the end 21b opposing the collar 13. In this configuration, the oil discharge path is arranged in a manner to be gradually apart from the oil film damper 50 in the axial direction X and to be shallower in depth, as going radially outside.

As shown in FIGs. 1 and 2, the plate 70 has a guide surface 72 formed on a surface thereof on the rotor shaft side in a manner to be gradually apart from the oil film damper 50 in the axial direction X as going radially outside. As shown in FIG.2, a radial outside end 133 of the oil discharge path 131 is positioned in a formation range 72a of the guide surface 72 in the axial direction X.

On the side of the turbine impeller 11, as shown in FIGs. 3 and 4, the oil supplied to the oil film damper 50 is discharged from an end of the oil film damper 50 on the turbine impeller 11 side and is scattered radially outside of the rotor shaft 10 via an oil discharge path 215 formed in the inner ring 21 (see FIGs.3 and 4). As shown in FIG. 4, the oil discharge path 215 is formed of a groove made by cutting out an axial direction end part 21c of the inner ring 21 on the turbine impeller 11 side into a recessed shape. As shown in FIG.3, the oil discharge path 215 is arranged in a manner to be gradually apart from the oil film damper 50 in the axial direction X as going radially outside. In other words, the oil discharge path 215 is shallower in depth as going radially outside. Thus, a bottom surface 216 of the oil discharge path 215 is tapered to be closer to the turbine impeller 11 as going radially outside. In the present embodiment, the oil discharge path 215 is formed in four places along a diameter direction of the inner ring 21 at peripherally equal intervals. In place of the oil discharge path 215 to be provided in the inner ring 21, an oil discharge path may be formed in the enlarged diameter part 111 opposing the inner ring 21. In this configuration, the oil discharge path is arranged in a manner to be gradually apart from the oil film damper 50 in the axial direction X and to be deeper in depth, as going radially outside.

As shown in FIGs.1 and 3, the outer ring contact part 35 has a guide surface 36 formed on a surface thereof on the side of the rotor shaft 10 in a manner to be gradually apart from the oil film damper 50 in the axial direction X as going radially outside. As shown in FIG.3, the radial outside end 217 of the oil discharge path 215 is positioned in a formation range 36a of the guide surface 36 in the axial direction X.

The rotor shaft 10 is mounted on the housing 30 in the following manner. As shown in FIG. 3, the ball bearings 20 are fitted into both ends of the retainer 60 to be opposite to each other as described above. The retainer 60 having the ball bearings 20 fitted therein is then inserted into the housing 30. As shown in FIG. 1, the outer ring 22 of the ball bearing 20 on the turbine impeller 11 side protrudes a little further in the axial direction X than a distal end 66 of the retainer 60, and thus the outer ring 22 abuts against the outer ring contact part 35 as a bottom part of the housing 30. The outer ring 22 of the ball bearing 20 on the compressor impeller 12 side also protrudes a little further in the axial direction X than a distal end 67 of the retainer 60, and thus the outer ring 22 abuts against the plate 70 by mounting a plate 70 on the housing 30 with a bolt 71. In this way, the two ball bearings 20 and the retainer 60 are held between the plate 70 and the housing 30 to be positioned and fixed.

Subsequently, the rotor shaft 10 having the turbine impeller 11 mounted thereon is inserted into the housing 30 from the turbine housing 33 side. The collar 13 and the compressor impeller 12 are then fixed by tightening the shaft end nut 14.

As shown in FIG. 2, in the ball bearing 20 on the compressor impeller 12 side, the outer ring 22 protrudes a little further in the axial direction X than the distal end 67 of the retainer 60 and thus a small clearance is formed between the inner ring 21 and the collar 13. Similarly, in the ball bearing 20 on the turbine impeller 11 side, as shown in FIG. 1, the outer ring 22 protrudes a little further in the axial direction X than the distal end 66 of the retainer 60 and thus a small clearance is formed between the inner ring 21 and the enlarged diameter part 111. As described above, in the both ball bearings 20, a small clearance is also formed between the end surface 21d of the inner ring 21 in the axial direction X on the side close to the ejection port 611 and the wall surface 68a of the recessed part 68 in which the ball bearing 20 is placed, the wall surface 68a opposing the end surface 21d.

As described above, the clearance is provided in each inner ring 21 of the two ball bearings 20 respectively, and both the inner rings 21 can move a little in a thrust direction, accordingly. Thus, the two ball bearings 20 can reliably support an axial load.

Next, operational effects of the bearing structure of a turbocharger 1 according to the present embodiment are described in detail.

In the bearing structure 1 according to the present embodiment, the oil discharge paths 131 and 215 are formed in a manner to be gradually apart from the oil film damper 50 in the axial direction as going radially outside, and thus the oil discharged from the oil film damper 50 is scattered toward the direction to be apart from the oil film damper 50 in an axial direction X, along the oil discharge paths 131 and 215 with centrifugal force. Such configuration enhances oil drainability to prevent the oil from adhering to the ball portion 23 in the ball bearing 20, and can prevent increase of friction in the ball bearing 20, accordingly. In addition, it is not necessary to arrange the oil discharge paths 131 and 215 for scattering the oil radially outside, away from the ball bearing 20. Such arrangement avoids excessive upsizing of the bearing structure 1 in the axial directional X, thus preventing reduction of mountability on a vehicle and/or an engine. The bearing structure 1 according to this embodiment is configured to include the ball bearing 20 in pairs. Such configuration eliminates the need to shorten the distance between the ball bearings 20 provided in pairs, and thus prevents increase of whirling of each impeller 11 and 12. Consequently, the tip clearance needs not be made large, which enables the bearing structure to maintain the operational efficiency.

In the bearing structure 1 according to the present embodiment, the outer ring contact part 35 and the plates 70 have guide surfaces 36 and 72 respectively formed on the surfaces thereof on the side of the rotor shaft 10 in a manner to be gradually apart from the oil film damper 50 in the axial direction as going radially outside. Thus, when the oil scattered from the oil discharge paths 131 and 215 reaches the guide surfaces 36 and 72, the oil is guided along the guide surfaces 36 and 72 toward the direction to be apart from the oil film damper 50 in the axial direction X. Such configuration provides a multiplier effect brought about by the oil discharge paths 131 and 215 and the guide surfaces 36 and 72, so that the bearing structure can exhibit an enhanced effect of inhibiting increase of the friction in the ball bearing 20, and an enhanced effect of improving the operational efficiency.

In the bearing structure 1 according to the present embodiment, the oil film damper 50 is formed between the inner ring 21 of the ball bearing 20 and the rotor shaft 10 (formed in the clearance P). Accordingly, components to be arranged inside the oil film damper 50 include the rotor shaft 10, and the turbine impeller 11 and the compressor impeller 12, both of which are mounted on the rotor shaft 10, but do not include the ball bearing 20 (the inner ring 21, the outer ring 22, the rotator 23, the holder 24, and the like). The (inertial) mass of the components arranged inside the oil film damper 50 is thus relatively small. Further, the inner diameter of the inner ring 21 of the ball bearing 20 is much smaller than the outer diameter of the outer ring 22, and thus the contact area of the oil film damper 50 and the outer peripheral surface 10c of the rotor shaft 10 is relatively small. Such configurations as mentioned above can relatively reduce viscous force between the inner ring 21 and the rotor shaft 10.

Reduction of the viscous force reduces inhibition force to hinder the rotation of a rotation body assembly 100 constituted by the components arranged inside the oil film damper 50 about a center of mass. Further, the smaller (inertial) mass of the components arranged inside the oil film damper 50 enables the rotation body assembly 100 to easily rotate eccentrically only with low energy. As a result, during rotation of the rotor shaft 10, the impellers 11 and 12 at both ends of the rotor shaft 10 are prevented from largely whirling. Consequently, generation of unusual noise can be prevented. Further, tip clearances between the turbine impeller 11 and the turbine housing 33 and between the compressor impeller 12 and the compressor housing 34 need not be so large that operation efficiency can be improved. In the case of the compressor housing 34 provided with an abradable seal, excessive contact of the compressor impeller 12 with the abradable seal can be prevented so that damage of the compressor impeller 12 and excessive wear of the abradable seal can be prevented. Moreover, as described above, the rotation body assembly 100 easily rotates eccentrically and thus not so high accuracy is required to adjust the mass balance of the rotation body assembly 100. As a result, the mass balance is easily adjusted and thus manufacturing costs can be reduced.

As described above, because the viscous force between the oil film damper 50 and the rotation body assembly 100 can be relatively reduced, an improvement in rotation response of the rotation body assembly 100 can be expected, and thus contributes to an improvement in transient performance of an internal combustion engine.

Especially when the viscosity of oil tends to be high, e.g. under low temperature environment, the reduction of the viscous force enables the bearing structure to sufficiently exhibit an oil damping effect on the rotation body assembly 100.

The inner ring 21 is configured to rotate with the rotation of the rotor shaft 10 via the oil film damper 50. Specifically, friction in the oil film damper 50 (that is, friction between the inner ring 21 and the rotor shaft 10) is larger than friction in the ball bearing 20 (that is, friction between the inner ring 21 and the outer ring 22). For this reason, when the rotor shaft 10 rotates, relative rotation occurs between the inner ring 21 and the outer ring 22 in the ball bearing 20 but relative rotation between the inner ring 21 and the rotor shaft 10 is suppressed in the oil film damper 50, so that the inner ring 21 can rotate with the rotation of the rotor shaft 10 only via the oil film damper 50. As a result, any additional mechanism for engaging the inner ring 21 with the rotor shaft 10 need not be provided to rotate the inner ring 21 with the rotor shaft 10. For example, screw hole machining on the rotor shaft 10 needs not be performed to engage the rotor shaft 10 with the inner ring 21. Machining on an end of the inner ring 21 needs not be performed to engage the end of the inner ring 21 with an oil slinger 8. Further, machining on the end of the inner ring 21 and the collar 13 needs not be performed to engage the end of the inner ring 21 with the collar 13. Therefore, such machining costs can be eliminated and the mass balance of the rotation body assembly 100 is easily adjusted and thus manufacturing costs can be reduced.

Because the rotor shaft 10 need not be subjected to screw hole machining, fatigue strength of the rotor shaft 10 is improved as compared to a case where the screw hole machining is performed on the rotor shaft 10. The improvement of fatigue strength eliminates the necessity to increase the diameter of the rotor shaft 10. As a result, the ball bearing 20 can be downsized and the contact area of the oil film damper 50 and the ball bearing 20 can be reduced. Consequently, the viscous force between the oil film damper 50 and the ball bearing 20 can be reduced to improve the operation efficiency of a turbocharger 1. Further, loosening of a screw that might be caused by high speed rotation of the rotor shaft 10 needs not be considered.

Further, in the bearing structure of a turbocharger 1 according to the present embodiment, oil discharge paths 131 and 215 have a radial outside end 133 and a radial outside end 217, respectively. The radial outside end 133 is positioned in a formation range 72a of the guide surface 72 in the axial direction X, and the radial outside end 217 is positioned in a formation range 36a of the guide surface 36 in the axial direction X. Thus, the oil scattered from the oil discharge paths 131 and 215 with centrifugal force easily reaches the guide surfaces 72 and 36, and is surely guided toward the direction to be apart from the oil film damper 50 in the axial direction X. Such configuration enables the bearing structure to exhibit an enhanced effect of inhibiting increase of the friction in the ball bearing 20, and an enhanced effect of improving the operational efficiency.

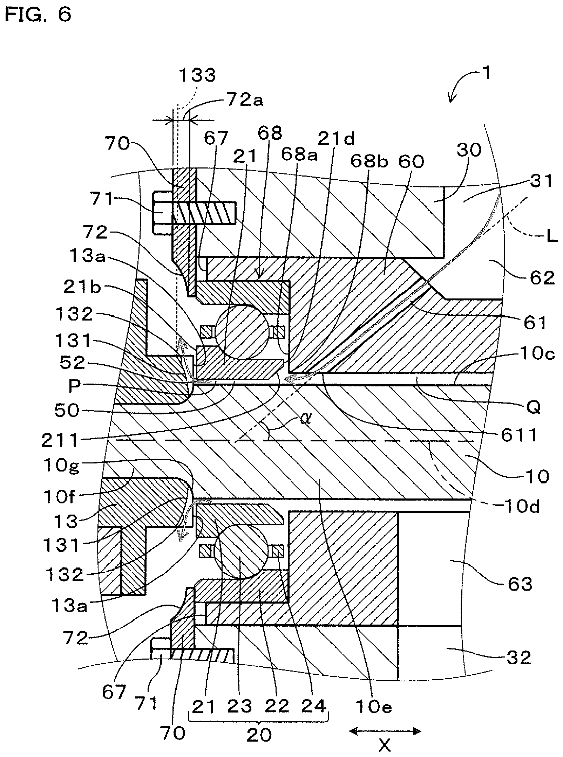

In the bearing structure of a turbocharger 1 according to the present embodiment, the oil discharge paths 131 and 215 have bottom surfaces 132 and 216, respectively, each surface forming a tapered surface in cross sectional view in the axial direction X. The bottom surfaces 132 and 216 may also have a curved surface, instead of the tapered surface. For example, in the bearing structure 1 according to Modification 1 as shown in FIG. 6, the bottom surface 132 of the oil discharge path 131 may form a curved surface that is curved in a manner to be slightly convex to the side of the oil film damper 50. Such configuration enables the oil discharge path 131 to more easily scatter the oil discharged from the oil film damper 50 toward the side of the compressor impeller 12, and thus the effect of inhibiting increase of the friction in the ball bearing 20 can be expected to be further enhanced.

In the bearing structure 1 according to the present embodiment, the guide surfaces 72 and 36 form a tapered surface in cross sectional view in the axial direction X. The guide surfaces 72 and 36 may also have a curved surface, instead of the tapered surface. For example, in the bearing structure of a turbocharger 1 according to Modification 1 as shown in FIG.6, the guide surface 72 may form a curved surface that is curved in a manner to be slightly concave to the side of the oil film damper 50. Such configuration enables the guide surface 72 to more easily guide the oil discharged from the oil film damper 50 toward the side of the compressor impeller 12, and thus the oil drainability can be improved and the effect of inhibiting increase of the friction in the ball bearing 20 can be expected to be further enhanced.

In the bearing structure 1 according to the present embodiment, the retainer 60 is formed in a cylindrical shape having a through hole into which the rotor shaft 10 is inserted. Two ball bearings 20 are respectively arranged at both ends of the retainer 60 in the axial direction X. Thus, the two ball bearings 20 bear the rotor shaft 10 at the both ends of the retainer 60, and rotational stability of the rotor shaft 10 is improved.

In the bearing structure 1 according to the present embodiment, the retainer 60 includes the oil supply path 61 that ejects oil toward the oil film damper 50 to supply the oil flowing in the oil film damper 50. This configuration enables to exhibit a wedge effect of positively charging the oil film damper 50 inside the inner ring 21 with the oil ejected from the oil supply path 61, and thus lubricity of the oil in the oil film damper 50 is improved.

In the bearing structure 1 according to the present embodiment, the inner ring 21 has the inner chamfered part 211 at an end on the side close to the ejection port 611 of the oil supply path 61 in the axial direction X. The inner chamfered part 211 is formed by chamfering the inner corner part of the inner ring 21. This configuration enables to easily charge the oil film damper 50 inside the inner ring 21 with the oil ejected from the oil supply path 61, and thus the lubricity of the oil in the oil film damper 50 is further improved by the wedge effect.

As described above, according to the present embodiment, it is possible to provide the bearing structure of a turbocharger 1 that can prevent generation of unusual noise, improve operation efficiency, and reduce manufacturing costs.

In the bearing structure 1 according to the present embodiment, two ball bearings 20 are provided. However, instead of such configuration, the ball bearing 20 may be configured to include a cylindrical inner ring that has such a form that each inner ring 21 of the two ball bearings 20 is connected with each other, and that is inserted inside the retainer 60; the outer ring 22 that is similar to that in the present embodiment; and the oil film damper 50 that is formed on the both ends of the retainer 60 in the axial direction X. Also in this case, the bearing structure exhibits operational effects equal to those of the present embodiment.

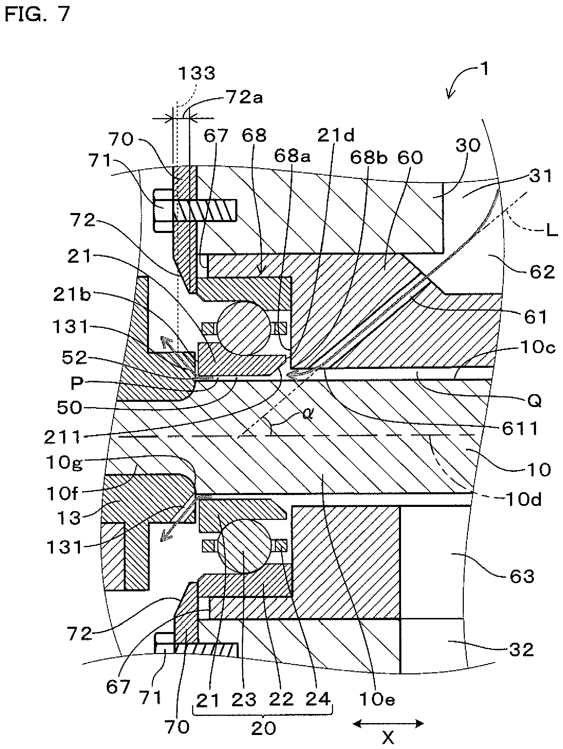

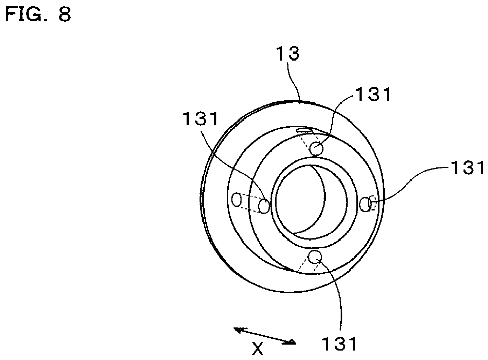

In the bearing structure 1 according to the present embodiment, the oil discharge path 131 provided on the collar 13 is formed of a concave groove. However, instead of such configuration, as shown in Modification 2 illustrated in FIGs. 7 and 8, the oil discharge path 131 may be formed of a through hole. The bearing structure in this modification exhibits operational effects equal to those of Embodiment 1.

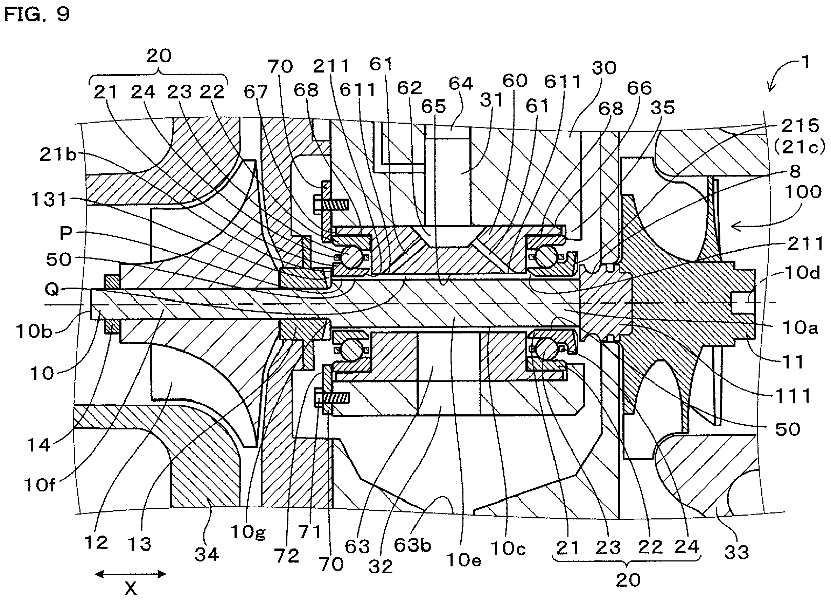

In the bearing structure 1 according to the present embodiment, the bearing structure is configured to include the oil discharge paths 131 and 217, and the guide surfaces 72 and 36. However, instead of such configuration, as shown in Modification 3 illustrated in FIG. 9, a configuration in which the oil discharge paths 131 and 215 are provided, but the guide surfaces 72 and 36 are not provided, may be adopted. The bearing structure in this modification exhibits operational effects equal to those of Embodiment 1 except for the operational effect brought about by the guide surfaces 72 and 36.

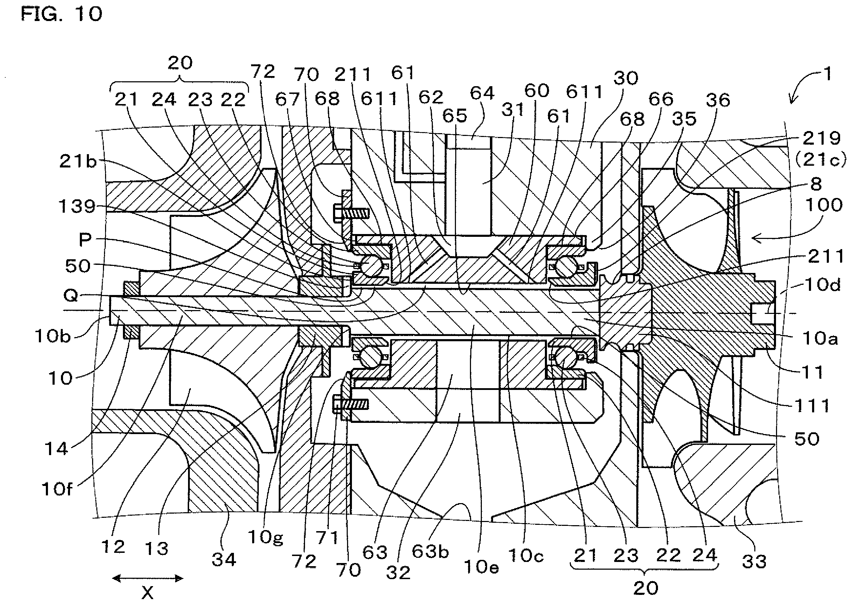

As shown in Modification 4 illustrated in FIG. 10, the bearing structure may be configured to include the oil discharge paths 139 and 219, each being formed of a groove extending in a direction perpendicular to the axial direction X, and the guide surfaces 72 and 36 identical to those of Embodiment 1. In Modification 4, each radial outside end of the oil discharge paths 139 and 219 is positioned respectively in a formation range of the guide surface 72 and in a formation range of the guide surface 36 in the axial direction X.

According to Modification 4, the oil discharged from the oil film damper 50 is scattered radially outside along the oil discharge paths 131 and 215 with centrifugal force, and then guided by the guide surfaces 72 and 36 respectively toward the direction to be apart from the oil film damper 50 in the axial direction X. Such configuration enhances oil drainability to prevent the oil from adhering to the ball portion 23 in the ball bearing 20, and can prevent the increase of friction in the ball bearing 20, accordingly. In addition, it is not necessary to arrange the oil discharge paths 131 and 215 for scattering the oil radially outside with centrifugal force, away from the ball bearing 20. Such arrangement avoids excessive upsizing of the bearing structure 1 in the axial directional X, thus preventing reduction of mountability on a vehicle and/or an engine. Further, the bearing structure according to this modification eliminates the need to shorten the distance between the ball bearings 20 provided in pairs, and thus prevents increase of whirling of each impeller 11 and 12. Consequently, the tip clearance needs not be made large, which enables the bearing structure to maintain the operational efficiency.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1% or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A bearing structure of a turbocharger (1), the bearing structure comprising:
a rotor shaft (10) that has a turbine impeller (11) mounted on a first end thereof and a compressor impeller (12) mounted on a second end thereof;
a ball bearing (20) that includes an inner ring (21) and an outer ring (22) that are supported in relatively rotatable manner, the inner ring (21) having the rotor shaft (10) inserted therein;
a retainer (60) that holds the outer ring (22);
a housing (30) that houses the rotor shaft (10), the ball bearing (20), and the retainer (60);
an oil film damper (50) that is formed of oil in a film state and is interposed between the inner ring (21) and an outer peripheral surface of the rotor shaft (10), the inner ring (21) being configured to rotate with rotation of the rotor shaft (10) via the oil film damper (50); and
an oil discharge path (131, 215) that is provided at least either on one end surface (21a) of the inner ring (21) in an axial direction or on an opposing surface (13a) of a collar (13), which is opposed to the inner ring (21), and that scatters oil discharged from the oil film damper (50) radially outside of the rotor shaft (10) with centrifugal force, the collar (13) being mounted on the rotor shaft (10) in a manner to be adjacent to the inner ring (21); wherein
the oil discharge path (131, 215) is formed of a groove or a through hole that is arranged in a manner to be gradually apart from the oil film damper (50) in the axial direction as going radially outside.

2. A bearing structure of a turbocharger (1), the bearing structure comprising:
a rotor shaft (10) that has a turbine impeller (11) mounted on a first end thereof and a compressor impeller (12) mounted on a second end thereof;
a ball bearing (20) that includes an inner ring (21) and an outer ring (22) that are supported in relatively rotatable manner, the inner ring (21) having the rotor shaft (10) inserted therein;
a retainer (60) that holds the outer ring (22);
a housing (30) that houses the rotor shaft (10), the ball bearing (20), and the retainer (60);
an oil film damper (50) that is formed of oil in a film state and is interposed between the inner ring (21) and an outer peripheral surface of the rotor shaft (10), the inner ring (21) being configured to rotate with rotation of the rotor shaft (10) via the oil film damper (50); and
an oil discharge path (131, 215) that is provided at least either on one end surface (21a) of the inner ring (21) in an axial direction or on an opposing surface (13a) of a collar (13), which is opposed to the inner ring (21), and that scatters oil discharged from the oil film damper (50) radially outside of the rotor shaft (10) with centrifugal force, the collar (13) being mounted on the rotor shaft (10) in a manner to be adjacent to the inner ring (21); wherein
the outer ring (22) is interposed between an outer ring contact part (35) that is formed on the housing (30) in a manner to abut against the outer ring (22) and a plate (70) that is mounted on the housing (30), in the axial direction through the retainer (60), and
at least one of the outer ring contact part (35) and the plate (70) has a guide surface (36) formed on a surface thereof on a side of the rotor shaft (10) in a manner to be gradually apart from the oil film damper (50) in the axial direction as going radially outside.

3. The bearing structure according to Claim 1, wherein
the outer ring (22) is interposed between an outer ring contact part (35) that is formed on the housing (30) in a manner to abut against the outer ring (22) and a plate (70) that is mounted on the housing (30), in the axial direction through the retainer (60), and
at least one of the outer ring contact part (35) and the plate (70) has a guide surface (36) formed on a surface thereof on a side of the rotor shaft (10) in a manner to be gradually apart from the oil film damper (50) in the axial direction as going radially outside.

4. The bearing structure according to Claim 2 or 3, wherein the oil discharge path (131, 215) has a radial outside end that is positioned in a formation range of the guide surface (36) in the axial direction.
